Europäisches Patentamt

European Patent Office

Office européen des brevets

(19)

(11) Numéro de publication: **0 017 516**

**A1**

(12) **DEMANDE DE BREVET EUROPEEN**

(21) Numéro de dépôt: **80400280.6**

(22) Date de dépôt: **29.02.80**

(51) Int. Cl.³: **D 06 F 33/02**
**G 05 B 19/10, A 47 L 15/46**

(30) Priorité: **02.03.79 FR 7905475**

(43) Date de publication de la demande:
**15.10.80 Bulletin 80/21**

(84) Etats Contractants Désignés:
**AT BE CH DE FR GB IT LU NL SE**

(71) Demandeur: **USINES ET FONDERIES ARTHUR MARTIN**
**(Société Anonyme)**
**43, Avenue Félix Louat Boîte Postale 105**
**F-60304 Senlis Cedex(FR)**

(72) Inventeur: **Camposilvan, Raymond**
**36, Rue de l'Adriatique**
**F-51100 Reims(FR)**

(74) Mandataire: **Laget, Jean-Loup et al,**
**Cabinet Pierre Loyer 18, Rue de Mogador**
**F-75009 Paris(FR)**

(54) **Dispositif électronique de programmation pour machine électrodomestique et ses applications.**

(57) Il comporte un sélecteur de programme (11), un écran de visualisation (25), un ensemble de voyants (12-21) définissant le cylce de lavage, un clavier à touches (5-10) de modification de programme et un ensemble électronique de liaison.

Machines à laver le linge ou la vaisselle.

EP 0 017 516 A1

./...

- 1 -

Dispositif électronique de programmation pour machine électrodomestique
et ses applications.

L'invention concerne un dispositif électronique de programmation pour
machine électrodomestique telle que machine à laver le linge par exemple.

Pour la commande du déroulement des opérations d'un cycle de lavage, il
est connu d'utiliser des programmateurs électromécaniques. Ces programmateurs
sont prévus pour assurer le déroulement d'un certain nombre de
cycles de lavage en fonction de deux paramètres qui sont la température
de lavage et la nature du linge à laver. Les programmateurs de ce type
comportent environ une douzaine de positions correspondant à autant de
cycles de lavage prédéterminés et immuables. Ils comportent aussi
quelques positions correspondant à des opérations particulières comme un
essorage court ou normal, un prélavage additionnel ou une vidange de cuve,
par exemple.

Il est également connu de prévoir une touche de réduction en cas de charge
réduite de linge à laver.

Certaines machines à laver le linge comportent, en outre, une commande
dite d'économie ayant pour objet de réduire uniformément le temps de
lavage à chaud ou la température de lavage.

On constate que les programmes de machines à laver le linge s'orientent
vers une plus grande complexité sans pour autant être parvenus à une
souplesse satisfaisante. Un but de la présente invention est de permettre
à l'utilisatrice d'une machine à laver le linge de choisir un programme de lavage parmi un nombre prédéterminé de programmes, et de choisir également des modifications à ce programme pour l'adapter à ses besoins propres.

Un autre but de l'invention est de définir un ensemble de programmes à partir de trois paramètres qui sont la température, la charge de linge et la nature du linge.

Un autre but encore de l'invention est de réaliser un ensemble de commande pour machine à laver le linge, muni de moyens d'affichage lumineux pour visualiser le programme choisi et les modifications apportées.

La présente invention a pour objet un dispositif électronique de programmation pour machine électrodomestique, par exemple pour machine à laver le linge, du type comportant un sélecteur électromécanique à deux mouvements, l'un de rotation, l'autre de translation, un écran de visualisation pour afficher des données codées et un ensemble de voyants lumineux correspondant à différentes phases des cycles de lavage et susceptibles d'être allumés en fonction des phases retenues par le programme choisi au moyen du sélecteur, caractérisé en ce que : le sélecteur est à trois positions axiales, une première position "tiré" stable, autorisant seule la rotation du sélecteur pour la sélection des programmes de lavage, une deuxième position "poussé" stable, de verrouillage assurant la protection du programme sélectionné, et une troisième position "poussé à fond", fugitive assurant le déclenchement du cycle de lavage; en ce que l'écran de visualisation affiche, en liaison avec le sélecteur, deux paramètres du cycle de lavage; et en ce qu'il comporte un clavier présentant un certain nombre de touches susceptibles de commander des modifications de programme par retranchement d'opérations ou réduction de quantités, et un ensemble de traitement électronique assurant les liaisons entre le sélecteur, le clavier et l'écran de visualisation.

Selon d'autres caractéristiques de l'invention:

- les deux paramètres affichés sont la nature du linge et la température de lavage;

- les données codées affichées sur l'écran de visualisation sont un code de programme et la charge de linge;

- le clavier comporte une touche de demi-charge, une touche d'abaissement de la température de lavage et une touche de suppression d'un rinçage;

- le clavier comporte une touche de modulation d'essorage faisant passer du plus fort au plus doux par pressions successives;

- le clavier comporte, en outre, une touche d'arrêt avec la cuve pleine et une touche de vidange;

- le clavier comporte encore une touche d'annulation des modifications de programme.

L'invention a également pour objet l'application du dispositif électronique précité à la programmation des machines à laver le linge ou la vaisselle, et des machines assurant le lavage et/ou le séchage du linge.

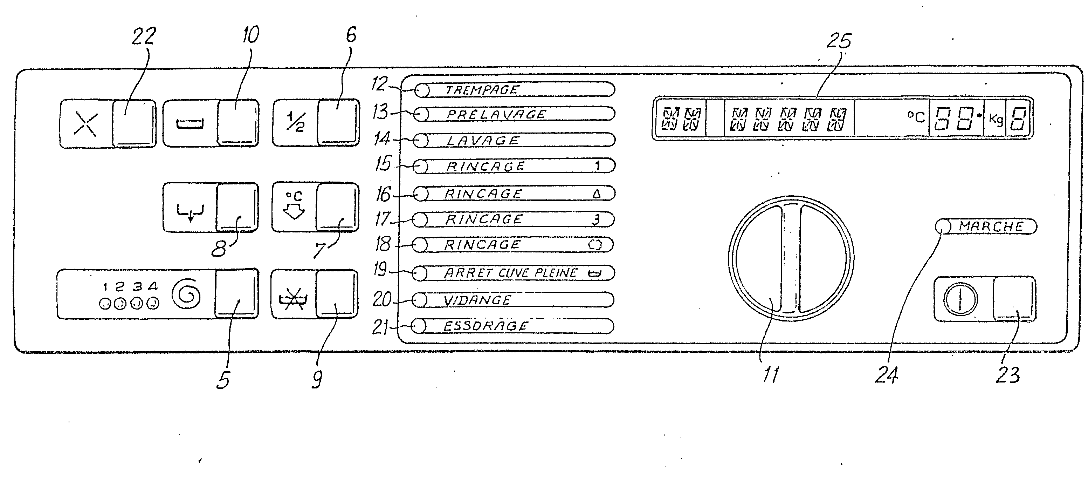

D'autres caractéristiques ressortiront de la description suivante, faite avec référence au dessin annexé sur lequel on peut voir, à titre d'exemple de réalisation, le panneau de commande d'une machine à laver le linge comportant le dispositif de programmation électronique, selon l'invention.

Le panneau de commande de machine à laver le linge selon l'invention comporte un sélecteur de programme 11, rotatif, à commande manuelle, ayant environ 15 positions possibles correspondant à autant de programmes préétablis . En outre, ce sélecteur est prévu pour trois positions axiales. Lorsqu'il est tiré, le sélecteur 11 peut être mis en rotation pour choisir un programme de lavage. Lorsqu'il est poussé, le sélecteur 11 ne peut pas être mis en rotation. Pour assurer la mise en marche du cycle de lavage, le sélecteur doit être poussé à fond. Il revient alors à sa position "poussé" et il y reste jusqu'à la fin du cycle.

Le panneau de commande comporte un programmateur électronique non représenté, assurant la mémorisation des différentes opérations constituant les programmes. Il comporte également un ensemble de traitement électronique, à base d'un microprocesseur, chargé notamment: de lire la position du sélecteur de programme et des touches de modulation; de faire avancer le programmateur à la position nécessaire; d'assurer la gestion du temps de chaque opération du programme, ainsi que le traitement des informations de température; de verrouiller le clavier de modulation de programme après le départ du cycle de lavage; et de gérer tout ou partie de l'affichage lumineux sur le panneau.

Les informations nécessaires à cet affichage lumineux et à la personnalisation des programmes, en fonction des différents pays d'utilisation, sont stockées dans une mémoire non représentée.

Le panneau de la machine à laver le linge présente une série de voyants lumineux 12 à 21 correspondant respectivement aux différentes phases d'un cycle complet de lavage, c'est-à-dire = 12 trempage, 13 prélavage, 14 lavage, 15 premier rinçage, 16 deuxième rinçage, 17 troisième rinçage, 18 quatrième rinçage (avec produit assouplissant ou adoucissant), 19 arrêt avec cuve pleine, 20 vidange et 21 essorage.

Lorsqu'un programme particulier a été choisi au moyen du sélecteur, tous les voyants lumineux correspondant à des opérations effectivement retenues dans ce programme, sont allumés. Ils s'éteignent au fur et à mesure que les opérations en question sont achevées.

A côté de cette série de voyants, le panneau présente un clavier muni d'un certain nombre de touches à action fugitive, de modulation de programme. Tout d'abord, une touche 6 dite de demi-charge. Lorsque la quantité de linge à laver est réduite, cette touche permet de faire baisser les niveaux d'eau dans la cuve, en intervenant sur trois niveaux de lavage et rinçage.

La touche 7, dite de diminution de température, est susceptible d'être actionnée deux fois de suite. Par exemple, sur un programme de lavage de linge en coton, prévu à 90°C, une première action sur la touche 7 permet de limiter la température de lavage à 60°C. Une deuxième action ramène cette température à 40°C. Mais une autre action sur la touche 7 n'aurait aucune influence. Les actions sur la touche 7 commandent un abaissement de la température de l'eau, mais le temps de brassage en chauffage et lavage, et le temps de brassage après chauffage, prévus dans les programmes de bases ne sont pas modifiés. A titre d'exemple, le temps minimal de brassage à 90°C est de 80mn, à 60°C de 42mn, et à 40°C de 27 mn, par exemple.

La touche 8, de vidange, supprime l'essorage intermédiaire dans les cas où il est prévu.

La touche 5, d'essorage variable, peut être actionnée plusieurs fois. Elle agit sur la fin de cycle en donnant quatre types d'essorage: 1 super, 2 moyen, 3 doux, et 4 très doux, les deux dernières positions supprimant l'essorage intermédiaire dans le cas où il est prévu. Dans les programmes comme "trempage", "synthétiques" ou "laine", une première action sur la touche 5 modifie le déroulement du cycle, de l'arrêt avec cuve pleine 19, à l'essorage 21, et elle programme un essorage doux 3; une deuxième action sur la touche 5 efface l'essorage doux 3 et programme l'essorage très doux 4.

Sur les programmes "coton" prévus normalement avec un essorage super 1, une première action sur la touche 5 allume le voyant 1 de l'essorage super et ne modifie pas le programme. La deuxième action éteint le voyant 1, allume le voyant 2 de l'essorage moyen et programme l'essorage moyen. Une troisième action sur la touche 5 éteint le voyant 2, allume le voyant 3 et programme l'essorage doux. Enfin, une quatrième action sur la touche 5 éteint le voyant 3, allume le voyant 4 et programme l'essorage très doux.

La touche 9 commande une suppression du premier rinçage, et réduit ainsi le nombre des rinçages, de 4 à 3 pour les programmes "coton", de 3 à 2 pour les programmes "synthétiques" et le programme "laine".

La touche 10 permet de commander un arrêt avec la cuve pleine dans le cas d'un programme "coton" par exemple.

La touche 22 d'effacement a un double rôle. Avant le départ du cycle de lavage, elle permet d'annuler les modulations sélectionnées et de revenir au programme de base, jouant ainsi le rôle de touche de correction. Après le départ du cycle de lavage, elle peut jouer le rôle de touche d'arrêt en commandant une vidange suivie d'arrêt.

Le panneau de commande de la machine comprend encore un bouton de marche-arrêt 23 à commande manuelle, un voyant de marche 24, et un écran de visualisation 25. Sur cet écran sont disposées des fenêtres équipées de diodes électro-luminescentes, susceptibles d'éclairer des références alphanumériques à 7, 14 ou 16 segments. Ces références sont de gauche à droite: le code de programmation constitué par une lettre; le code i.s.o. constitué par un chiffre; le type du linge correspondant au programme choisi, avec cinq lettres; la température de lavage, en deux chiffres; et la charge de linge, codée par un chiffre.

Le fonctionnement du panneau de commande s'analyse de la façon suivante: la machine à laver est mise sous tension par action sur la touche 23 de marche-arrêt; le sélecteur 11 est alors tiré et déplacé en rotation pour choisir le programme désiré; les voyants 12 à 21 s'allument alors en fonction de ce programme, ainsi que les fenêtres de l'écran de visualisation 25.

La modulation du programme est alors assurée par action sur les touches 5 à 10, avec éventuellement une correction par action sur la touche 22.

Une action d'appui à fond sur le sélecteur 11 qui revient à sa position "poussé", assure la mise en marche du cycle de lavage et l'allumage du voyant 24.

Dans le cas des cycles de "trempage" ou de "synthétiques", l'arrêt se fait avec la cuve pleine. Un appui sur le sélecteur 11 commande une vidange. Si l'on désire un essorage, il faut appuyer sur la touche 5 et de nouveau sur le sélecteur 11.

Selon l'invention, on utilise pour la commande de programmation de la machine à laver le linge, à la fois des éléments électromécaniques comme le sélecteur de programme, et des éléments électroniques comme le micro-processeur, la mémoire et le système de visualisation.

Le programme de lavage est choisi à l'aide du sélecteur, en fonction de deux paramètres qui sont la nature du linge et la température de lavage. La touche 6 de demi-charge permet de réduire la quantité d'eau utilisée si la quantité de linge à laver est elle-même réduite. Par ailleurs, les touches 5 et 7 à 10 permettent de modifier le programme de lavage par retranchement d'opérations ou abaissement de la température de lavage. Toutes ces modifications ou modulations de programme sont prévues dans le sens de l'économie.

Le dispositif électronique selon l'invention a été décrit dans le cas d'une machine à laver le linge, mais il est parfaitement transposable au cas des machines à laver la vaisselle, et au cas des machines assurant le lavage et/ou le séchage du linge par exemple.

Revendications de brevet.

1. Dispositif électronique de programmation pour machine électrodomestique, par exemple pour machine à laver le linge, du type comportant un sélecteur électromécanique à deux mouvements, l'un de rotation, l'autre de translation, un écran de visualisation pour afficher des données codées et un ensemble de voyants lumineux correspondant à différentes phases des cycles de lavage et susceptibles d'être allumés en fonction des phases retenues par le programme choisi au moyen du sélecteur, caractérisé en ce que: le sélecteur est à trois positions axiales, une première position "tiré" stable, autorisant seule la rotation du sélecteur pour la sélection des programmes de lavage, une deuxième position "poussé" stable, de verrouillage assurant la protection du programme sélectionné, et une troisième position "poussé à fond", fugitive assurant le déclenchement du cycle de lavage; en ce que l'écran de visualisation affiche, en liaison avec le sélecteur, deux paramètres du cycle de lavage; et en ce qu'il comporte un clavier présentant un certain nombre de touches susceptibles de commander des modifications de programme par retranchement d'opérations ou réduction de quantités, et un ensemble de traitement électronique assurant les liaisons entre le sélecteur, le clavier et l'écran de visualisation.

2. Dispositif selon la revendication 1, caractérisé en ce que les deux paramètres affichés sont la nature du linge et la température de lavage.

3. Dispositif selon l'une quelconque des revendications 1 ou 2, caractérisé en ce que les données codées affichées sur l'écran de visualisation sont un code de programme et la charge de linge.

4. Dispositif selon l'une quelconque des revendications 1 à 3, caractérisé en ce que le clavier comporte une touche de demi-charge, une touche d'abaissement de la température de lavage et une touche de suppression d'un rinçage.

5. Dispositif selon l'une quelconque des revendications 1 à 4, caractérisé en ce que le clavier comporte une touche de modulation d'essorage faisant passer du plus fort au plus doux par pressions successives.

0017516

6. Dispositif selon l'une quelconque des revendications 1 à 5, caractérisé en ce que le clavier comporte, en outre, une touche d'arrêt avec la cuve pleine et une touche de vidange.

7. Dispositif selon l'une quelconque des revendications 1 à 6, caractérisé en ce que le clavier comporte encore une touche d'annulation des modifications de programme.

8. Application du dispositif électronique selon la revendication 1 à la programmation des machines à laver le linge ou la vaisselle.

9. Application du dispositif électronique selon la revendication 1 à la programmation des machines assurant le lavage et/ou le séchage du linge.

0017516

**Office européen des brevets**

**RAPPORT DE RECHERCHE EUROPEENNE**

Numéro de la demande
EP 80 40 0280

## DOCUMENTS CONSIDERES COMME PERTINENTS

| Catégorie | Citation du document avec indication, en cas de besoin, des parties pertinentes | Revendication concernée |
|---|---|---|
| | FR - A - 2 207 208 (THOMSON-BRANDT)<br><br>* Page 1, lignes 25-34; page 3, lignes 1-12; page 4, lignes 2-7; page 4, lignes 22-27; figures 1, 2 *<br><br>-- | 1,2,8,9 |
| | FR - A - 2 140 035 (INDUSTRIE A. ZANUSSI)<br><br>* Page 1, lignes 1-3; page 1, lignes 15-24 *<br><br>-- | 1,8,9 |
| | FR - A - 1 153 133 (CIE. INDUSTRI-ELLE DES TELEPHONES)<br><br>* Page 1, colonne de gauche, ligne 2 à ligne 20; page 3, colonne de droite, ligne 58 - page 4, colonne de gauche, ligne 15; figures 1,9 *<br><br>-- | 1 |
| | DE - A - 1 610 208 (GEBR. SCHARPF KG)<br><br>* Page 2, lignes 2-14; page 6, ligne 2 - page 7, ligne 8; figures 1a,1b *<br><br>-- | 1,4,8,9 |
| | FR - A - 2 098 065 (SIEMENS ELEC-TROGERATE)<br><br>* Page 3, ligne 34 - page 4, ligne 11; figure 1 *<br><br>-- | 2-6,8,9 |
| | FR - A - 2 336 509 (MIELE & CIE)<br><br>* Page 2, ligne 5 - ligne 14; page 2, lignes 28-32; page 3, lignes 10-15 | 3,7-9 |

**CLASSEMENT DE LA DEMANDE (Int. Cl. ³)**

D 06 F 33/02
G 05 B 19/10
A 47 L 15/46

**DOMAINES TECHNIQUES RECHERCHES (Int. Cl. ³)**

D 06 F 33/00
D 06 F 33/02
A 47 L 15/46
H 01 H 43/02
H 01 H 25/06
D 06 F 58/28

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interference
D: document cité dans la demande
L: document cité pour d'autres raisons
&: membre de la même famille, document correspondant

X Le présent rapport de recherche a été établi pour toutes les revendications

./..

| Lieu de la recherche | Date d'achevement de la recherche | Examinateur |
|---|---|---|
| La Haye | 03-07-1980 | RUGGIU |

OEB Form 1503.1  06.78

Office européen
des brevets

**RAPPORT DE RECHERCHE EUROPEENNE**

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| P,E | FR - A - 2 416 970 (BAUKNECHT)<br>* Page 4, ligne 12 - page 7, ligne 26; figure 1 *<br>& GB - A - 2 017 341<br>& DE - A - 2 806 150<br>-- | 1,2,4-9 | |
| P,E | FR - A - 2 419 343 (BRU FENOSA A. et al.)<br>* Page 1, lignes 1-4; page 2, lignes 7-9; page 3, lignes 13-27; figure *<br>& NL - A - 79 01 797<br>& DE - A - 2 908 509<br>---- | 1-5,8,9 | |

DOMAINES TECHNIQUES RECHERCHES (Int. Cl. 3)

OEB Form 1503.2    06.78